# EUROPÄISCHE PATENTANMELDUNG

(11) **EP 0 921 080 A1**
(43) Veröffentlichungstag der Anmeldung: **09.06.1999**
(21) Anmeldenummer: 98121196.4
(22) Anmeldetag: 13.11.1998
(51) Int. Cl.: B65F 1/14

(54) **Glascontainer**

(30) Priorität: 03.12.1997 DE 19753633
(71) Anmelder: Der Grüne Punkt-Duales System Deutschland Aktiengesellschaft, 51145 Köln (DE); Dambach-Werke GmbH, D-76571 Gaggenau (DE); Feutron GmbH, 07973 Greiz (DE); Koch, Claus, 40221 Düsseldorf (DE)
(72) Erfinder: Koch, Claus, 40221 Düsseldorf (DE)
(74) Vertreter: Tönhardt, Marion, Dr.

(57) **Zusammenfassung**

Ein Container ist gekennzeichnet durch einen hohlzylindrischen Außenkörper (10), der auf einer Bodenplatte (14) ruht, wobei in dem Außenkörper mindestens eine Einwurföffnung (18) vorgesehen ist und eine Vielzahl parallel zu der Zylinderachse des Außenkörpers verlaufender Längsstreben (12), die an der Außenseite des Außenkörpers angeordnet sind.

## Beschreibung

Die Kreislaufverwertung von Altglas ist um so erfolgreicher, je sauberer Gläser nach den einzelnen Farben sortiert in die entsprechenden Container eingeworfen werden. So hat man als Orientierungshilfe für die entsorgende Person Glascontainer bereitgestellt, die durch ihre äußere Farbgebung bereits angezeigt haben, welche Art von Glas eingeworfen werden darf. Bisher bestanden solche Container aus faserverstärktem Kunststoffmaterial. Im rauhen Entsorgungsbetrieb werden solche Container sehr belastet, ganz abgesehen davon, daß sie den Witterungseinflüssen über das Jahr ausgesetzt sind.

Da die Container überwiegend in Wohngebieten aufgestellt werden, ergibt sich die Notwendigkeit, Container bereitzustellen, die neben der technischen Funktionalität auch gewissen ästhetischen Grundanforderungen genügen.

So liegt der Erfindung die Aufgabe zugrunde, einen Container zu schaffen, der auch nach jahrelangem Einsatz hinsichtlich Funktionalität und Ästhetik keine Einbußen erleidet.

Diese Aufgabe wird von einem Container nach Anspruch 1 gelöst. Vorteilhafte Ausgestaltungen sind Gegenstand der Unteransprüche.

Erfindungsgemäß weist der Container einen hohlzylindrischen Außenkörper auf, der auf einer Bodenplatte ruht, wobei in dem Außenkörper mindestens eine Einwurföffnung vorgesehen ist, ferner eine Vielzahl parallel zu der Zylinderachse des Außenkörpers verlaufender Längsstreben, die an der Außenseite des Außenkörpers angeordnet sind.

Durch die Verwendung der Längsstreben gelingt es nicht nur, den hohlzylindrischen Außenkörper mechanisch zu stabilisieren und verwindungssicher zu gestalten, durch die vielfältigen Möglichkeiten, sie anzuordnen, ergibt sich zudem eine Variabilität in der Gestaltung.

So können die Längsstreben in regelmäßigem Winkelabstand angeordnet sein, eine unterschiedliche optische Wirkung läßt sich auch durch zumindest eine Gruppe nebeneinander angeordneter Längsstreben erzielen.

Zur Stabilität trägt bei, wenn an dem Außenkörper ein oberer Abschlußring angebracht ist, an dem die Längsstreben festgelegt sind.

Nach einer bevorzugten Ausführungsform können die Längsstreben in radialer Richtung beabstandet vom Außenkörper festgelegt sein.

Zur besseren Orientierung des Benutzers trägt bei, wenn ein den Außenkörper umgebendes Lichtband vorgesehen ist. Die Höhe, in der das Lichtband am hohlzylindrischen Außenkörper angeordnet ist, bzw. seine Lage relativ zu der Einwurföffnung gibt eine weitere Hilfe für den Benutzer, welche Art von Glas in den Container einzuwerfen ist. Weiter beitragen kann es auch, die Längsstreben farblich zu kennzeichnen oder ein entsprechend farbiges Symbol in der Nähe der Einwurföffnung vorzusehen. Durch die Anordnung des Lichtbandes bleiben die Farben auch bei nachlassendem Tageslicht für den Benutzer unterscheidbar.

Bevorzugt wird das Lichtband den Außenkörper im wesentlichen in einer Höhe verlaufend umgeben. Es ist aber auch vorstellbar, daß dieses abschnittsweise in Richtung der Zylinderachse versetzt angeordnet ist oder die Ebene des Lichtbandes unter einem von 90° abweichenden Winkel zur Zylinderachse verläuft.

Weiter bevorzugt kann das Lichtband in dem lichten Raum zwischen Außenkörper und Längsstreben verlaufen.

Für den Außenkörper kann weiter vorgesehen sein, daß er zu seinem Bodenbereich hin konisch verläuft.

Nach einer besonders bevorzugten Ausführungsform weist der Container eine Präsentiertafel auf, an der beispielsweise Werbung anzubringen ist oder auch Informationen für den Benutzer angegeben werden. Um die Präsentiertafel leicht aktualisieren zu können, kann diese als Wechselrahmen ausgebildet sein oder die Schaufläche kann wie ein Deckel, z. B. mit seitlich angebrachten Scharnieren, zur Aktualisierung geöffnet und geschlossen werden.

Bevorzugt ist die Präsentiertafel an mindestens einer der Längsstreben oder zwischen jeweils zwei Längsstreben angebracht, damit sich dem Benutzer ein unterbrechungsfreies Bild zeigt.

Es kann auch vorteilhaft sein, die Schaufläche der Präsentiertafel zu beleuchten.

Eine solche Beleuchtung ist bevorzugt innerhalb der Präsentiertafel angeordnet.

Bevorzugt ist zumindest die Schaufläche der Präsentiertafel so gestaltet, daß sie der Außenkontur des Außenkörpers im wesentlichen folgt.

Für den Container können die bekannten Materialien verwendet werden, die besondere Witterungsunempfindlichkeit erhält man aber beispielsweise, wenn der Außenkörper aus Edelstahl besteht, der zum Erzielen eines besonderen Oberflächeneffekts beispielsweise perlgestrahlt sein kann.

Die Langzeitstabilität des Containers wird weiter verbessert, wenn nicht der Außenkörper selbst als Sammeleinrichtung verwendet wird, sondern wenn zusätzlich ein Innenkörper vorgesehen ist, welcher vollständig in dem Außenkörper versenkbar ist. Zum Entsorgen wird dann lediglich dieser Innenkörper bewegt, so daß der Außenkörper beispielsweise fest mit dem Untergrund verbunden werden kann.

Bevorzugt ist der Innenkörper zu seinem Bodenbereich hin konisch zulaufend ausgebildet und weist auf seiner Außenwand zumindest eine Führungseinrichtung auf, die in einer entsprechenden Führungseinrichtung, welche im Außenkörper vorgesehen ist, geführt wird. Dabei sollte für die Person, die mit der Entsorgung befaßt ist, deutlich erkennbar sein, wie der Innenkörper relativ zu dem Außenkörper zu positionieren ist, damit die Führungseinrichtungen ineinander greifen können.

Die Führungseinrichtungen, welche am Außenkörper vorgesehen sind, können sich in ihrem oberen Bereich verjüngen, um ein leichteres Einsetzen des Innenkörpers in den Außenkörper zu ermöglichen. Sobald sich die sich verjüngenden Führungseinrichtungen des Außenkörpers mit den Führungseinrichtungen des Innenkörpers in Eingriff befinden, stellt sich bei einem weiteren Absenken des Innenkörpers automatisch die exakte relative Position des Außen- und des Innenkörpers ein.

Die Führungseinrichtungen des Außenkörpers können mit dem oberen Ende der zylindrischen Außenwand abschließen, sie können jedoch auch über diesen hinausragen, damit sowohl die Person, die mit der Entsorgung befaßt ist, den Innenkörper frühzeitig relativ zu dem Außenkörper positionieren kann und der oben beschriebene automatische Positionierungsvorgang bereits vor einem Eintauchen des Innenkörpers in den Außenkörper stattfinden kann, womit mögliche Beschädigungen bei einem Aneinanderstoßen der beiden Körper vermieden werden.

Weiter sollte der Innenkörper mit einem von außen zugänglichen Entnahmesystem versehen sein, das so weit in den Außenkörper versenkt ist oder versenkbar ist, daß der Gesamteindruck des Containers dadurch nicht gestört wird.

Im folgenden soll die Erfindung anhand der beigefügten Zeichnungen näher erläutert werden. Es zeigt:
- Figur 1: eine Vorderansicht einer ersten Ausführungsform des Containers gemäß der vorliegenden Erfindung;
- Figur 2: eine Vorderansicht einer zweiten Ausführungsform des Containers gemäß der Erfindung;
- Figur 3: eine Vorderansicht einer dritten Ausführungsform eines Containers gemäß der Erfindung;
- Figur 4: eine Vorderansicht einer vierten Ausführungsform eines Containers gemäß der Erfindung;
- Figur 5: eine Rückansicht eines Containers gemäß der Erfindung;
- Figur 6: eine Ausführungsform eines Innenkörpers zur Verwendung bei einem Container der vorliegenden Erfindung;
- Figur 7: eine Schemazeichnung des in den Außenkörper eingesetzten Innenkörpers der Figur 6;
- Figur 8: eine Variante eines Innenkörpers;
- Figur 9: eine Ausführungsform eines Führungssystems bei zum Bodenbereich hin konisch zulaufendem Innenkörper; und
- Figur 10: eine schematische Draufsicht auf einen Container gemäß der vorliegenden Erfindung.

Obwohl die Erfindung im folgenden im Zusammenhang mit dem Trennen von Glas beschrieben wird, also insbesondere Glascontainer angesprochen sind, ist die Erfindung auf diese Anwendung nicht beschränkt. Der Container kann immer dann zum Einsatz kommen, wenn es gilt, ganz allgemein irgendwelche Materialien zu entsorgen oder zu sammeln.

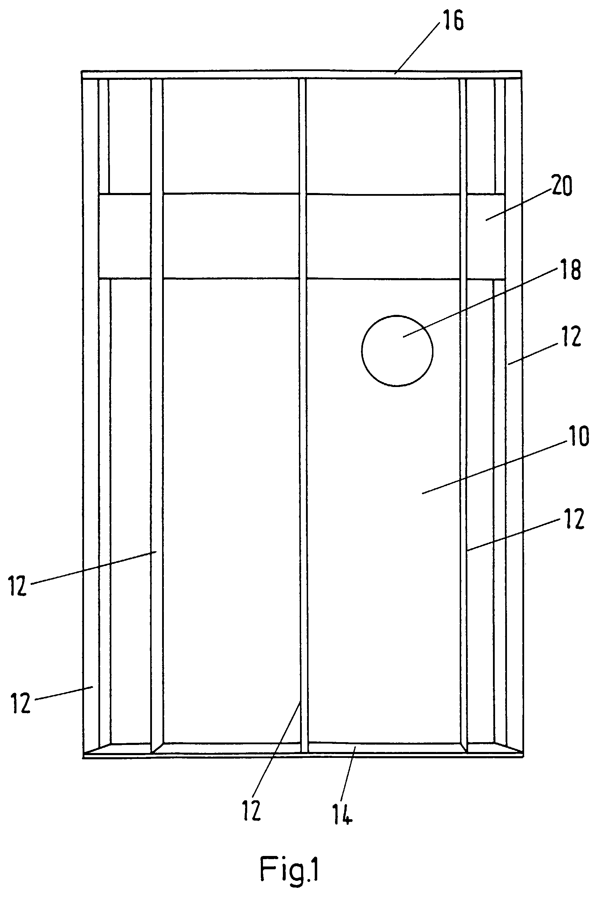

Der in Figur 1 dargestellte Container besteht aus einem hohlzylindrischen Außenkörper 10, der in seiner praktischen Ausführungsform eine Höhe von ungefähr 1,80 m bis 2,70 m haben wird. Der Außenkörper 10 ruht auf einer Bodenplatte 14 und trägt einen oberen Abschlußring oder Baldachin 16. Zwischen der Bodenplatte 14 und dem Baldachin 16 ist eine Vielzahl von Längsstreben 12, hier in regelmäßigen Winkelabständen derart angeordnet, daß sich zwischen den Längsstreben und der Außenwand des Außenkörpers 10 in radialer Richtung ein lichter Raum 11 befindet. Der Außenkörper 10 ist auf einer vorwählbaren Höhe mit einer Einwurföffnung 18 oder auch mit mehreren Einwurföffnungen versehen. Diese ist bzw. sind in üblicher Weise mit einer nachgiebigen Gummilippe verschlossen. Oberhalb der Einwurföffnung 18 ist ein Lichtband 20 angeordnet, das den Außenkörper 10 vollständig auf einer Höhe umgibt. Das Lichtband kann als Farbband, beispielsweise in den Farben Braun, Weiß und Grün, entsprechend der Farbe des in den Container einzuwerfenden Glases, ausgebildet sein. Als Material für das Lichtband hat sich Acryl als geeignet herausgestellt.

Gleichermaßen können die Längsstreben 12 farbig lackiert sein, um dem Benutzer ebenfalls Information über das einzuwerfende Gut zu geben.

In der Praxis wird ein derartiger Außenkörper im Zusammenhang mit einem später zu beschreibenden Innenkörper verwendet werden. Soll auf den Innenkörper verzichtet werden, so bietet es sich an, auf den Baldachin 16 ein Dach aufzusetzen, um das Innere des Containers vor Witterungseinflüssen zu schützen. Zweckmäßig ist auch im unteren Bereich des Außenkörpers ein nicht dargestellter Wasserablauf vorgesehen.

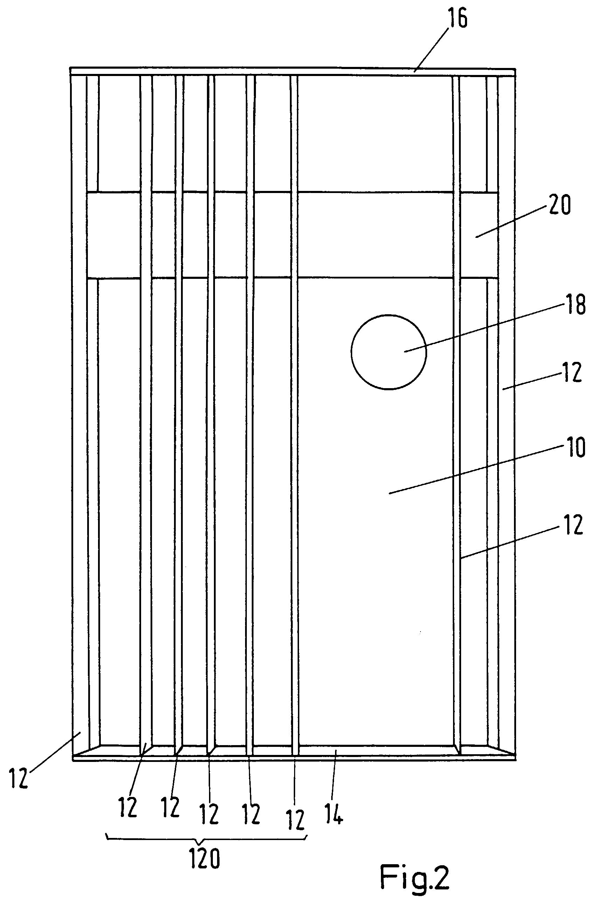

Figur 2 zeigt eine Variante des Containers nach Figur 1, bei dem eine unterschiedliche optische Wirkung dadurch erreicht wird, daß eine Vielzahl von Längsstreben 12 relativ dicht nebeneinanderliegend angeordnet sind und so eine Gruppe 120 bilden, während die weiteren Längsstreben 12, wie bei der Ausführungsform nach Figur 1, in regelmäßigen Winkelabständen angeordnet sind. Diese Gruppe 120 aus Längsstreben kann beispielsweise benachbart der Einwurföffnung 18 vorgesehen sein. Bezüglich der weiteren Gestaltung entspricht der Container nach Figur 2 dem nach Figur 1.

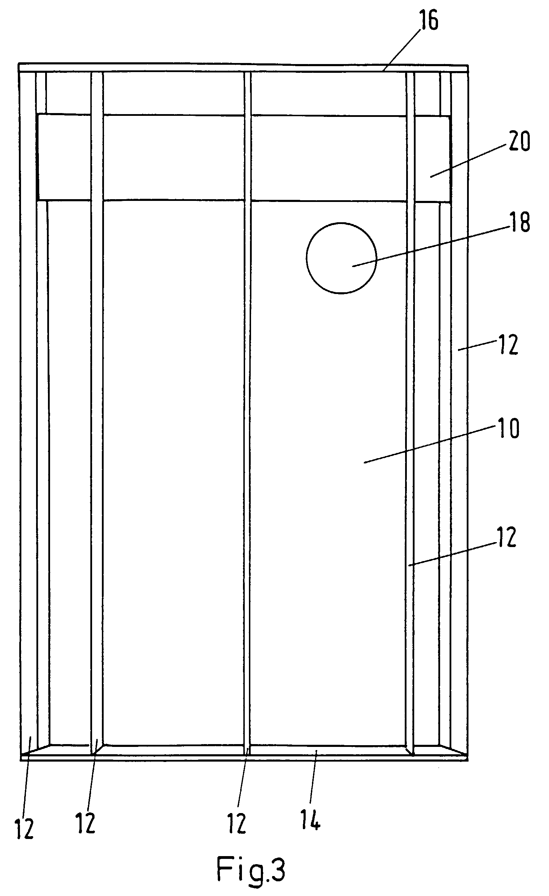

Außer durch eine unterschiedliche Farbgebung kann dem Benutzer beispielsweise durch die Anordnung des Lichtbandes 20 in einer anderen Höhe angezeigt werden, daß der Container für ein unterschiedliches Material gedacht ist. Gleichzeitig ist, wie bei der Ausführungsform nach Figur 3 zu sehen, die Einwurföffnung 18 in ihrer Höhe gegenüber der der Figur 1 oder 2 geändert.

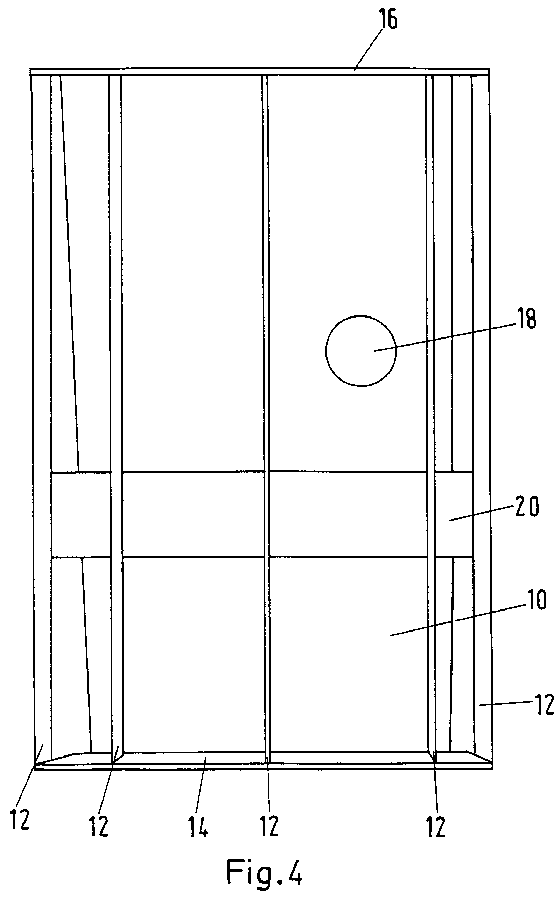

Eine weitere Variante, bei der das Lichtband 20 unterhalb der Einwurföffnung 18 angeordnet ist, zeigt Figur 4. Hier ist zudem der Außenkörper 10 zum Bodenbereich 14 hin konisch zulaufend ausgebildet.

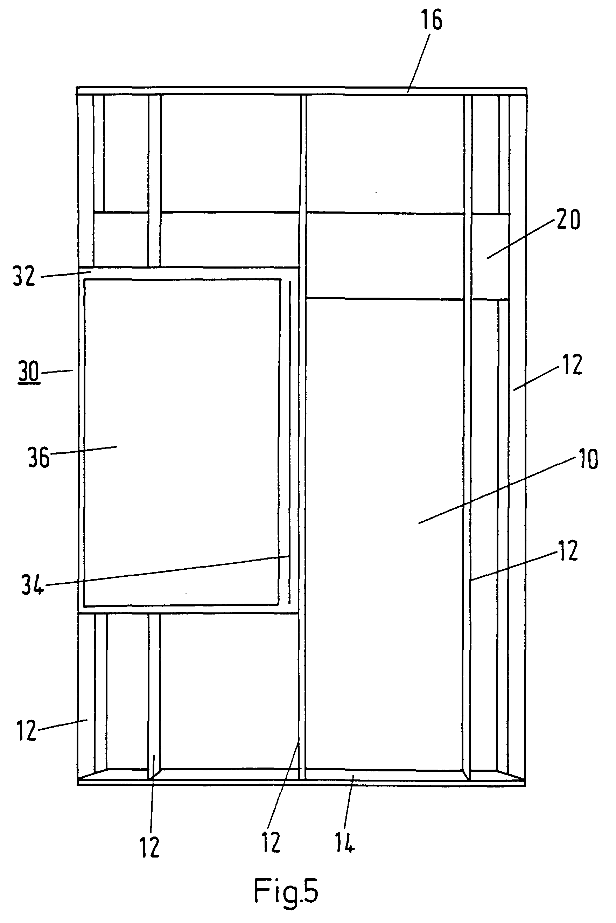

In Figur 5 ist ein Beispiel einer Rückansicht für einen Container gemäß der Erfindung dargestellt. In Betrachterrichtung vor den Längsstreben 12 ist eine Präsentiertafel 30 angeordnet, welche eine von einem Rahmen 32 umgebene Schaufläche 36 zeigt. Die Schaufläche kann zu Werbezwecken genutzt werden, aber auch als Informationsträger für den Benutzer des Containers dienen. Dazu ist bevorzugt der Rahmen 32 als Wechselrahmen ausgestaltet, um eine Aktualisierung des Schauflächeninhaltes problemlos durchführen zu können. Die Präsentiertafel 30 ist in einer Höhe angeordnet, daß sie teilweise über dem Lichtband 20 liegt. So kann das Lichtband 20 auch die Schaufläche 36 mit beleuchten. Es ist aber bevorzugt, daß eine zusätzliche Beleuchtung für die Schaufläche 36 vorgesehen ist. Als Aufmerksamkeitsträger kann im Bereich des Rahmens, beispielsweise parallel zu dem Längsleisten 12 verlaufend, eine Leuchtleiste 34 vorgesehen sein. Diese muß nicht eine durchgezogene Linie bilden, sondern kann auch ein unterbrochenes Muster zeigen.

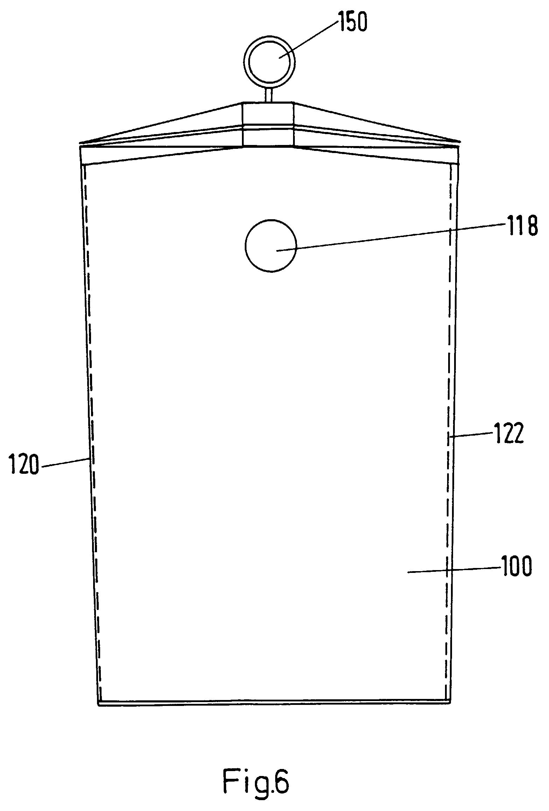

Figur 6 zeigt eine Schemaansicht eines Innenkörpers 100, der zusammen mit dem Außenkörper nach einer der Figuren 1 bis 5 verwendet werden kann. Der Innenkörper 100 ist, ähnlich wie der Außenkörper der Figuren 1 bis 5, ein Hohlkörper, dessen Querschnitt kreisförmig oder polygonal ist und der zu seinem Bodenbereich hin konisch zuläuft. Eine Einwurföffnung 118 ist in der Wand des Innenkörpers 100 vorgesehen, die mit der Einwurföffnung des Außenkörpers in Deckung zu bringen ist. Um die korrekte Ausrichtung des Innenkörpers 100 in bezug auf den Außenkörper zu gewährleisten, sind Führungsschienen 120, 122 vorgesehen, hier einander diametral gegenüberliegend angeordnet, die in entsprechende Führungseinrichtungen im Außenkörper eingreifen. Im oberen Bereich des Innenkörpers 100 ist ein an sich bekanntes Entnahmesystem 150 angeordnet. Dieses weist einen Ring auf, der mit einem Kranhaken oder dergleichen gegriffen werden kann. Der Innenkörper 100 wird dann aus dem Außenkörper herausgezogen und kann auf die bekannte Weise nach unten entleert werden.

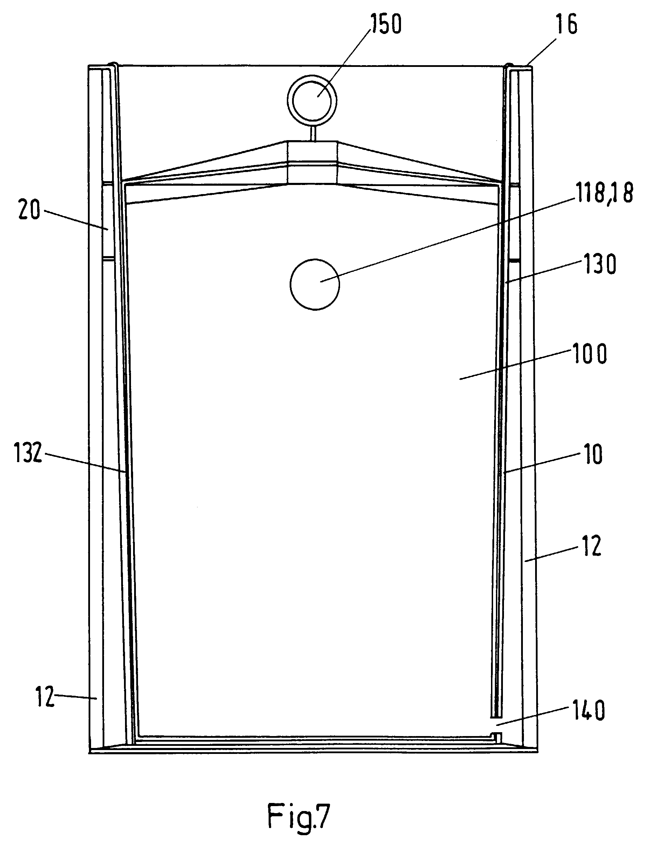

In Figur 7 ist in einer Schemaansicht dargestellt, wie der Innenkörper 100 im Außenkörper 10 angeordnet ist. Bei dieser Ausführungsform weisen der Innenkörper 100 und der Außenkörper 10 im wesentlichen die gleiche Konizität auf. Es ist aber auch möglich, daß der Außenkörper 10 nicht konisch verläuft und lediglich seine Führungseinrichtungen 130, 132, hier Führungsbänder, an die Konizität des Innenkörpers 10 angepaßt sind. Jedenfalls muß sichergestellt werden, daß die Führungsschienen 120, 122 des Innenkörpers 100 mit den Führungsbändern 130, 132 des Außenkörpers 10 in Eingriff kommen und der Innenkörper 10 somit geführt in den Außenkörper 10 gleitet, so daß schließlich nicht nur die Einwurföffnungen 118, 18 in Deckung gebracht sind, sondern gegebenenfalls auch Öffnungen für den Wasserablauf, deren Lage schematisch bei 140 angegeben ist. Dazu sind die Führungsbänder 130, 132 für die entsorgende Person sichtbar aus dem Außenkörper 10 über dem Baldachin 16 hinausgeführt. Das Entnahmesystem 150 für den Innenkörper 100 befindet sich vollständig innerhalb des Außenkörpers 10 und kann gegebenenfalls auch als Dach für den Innenkörper 100 dienen.

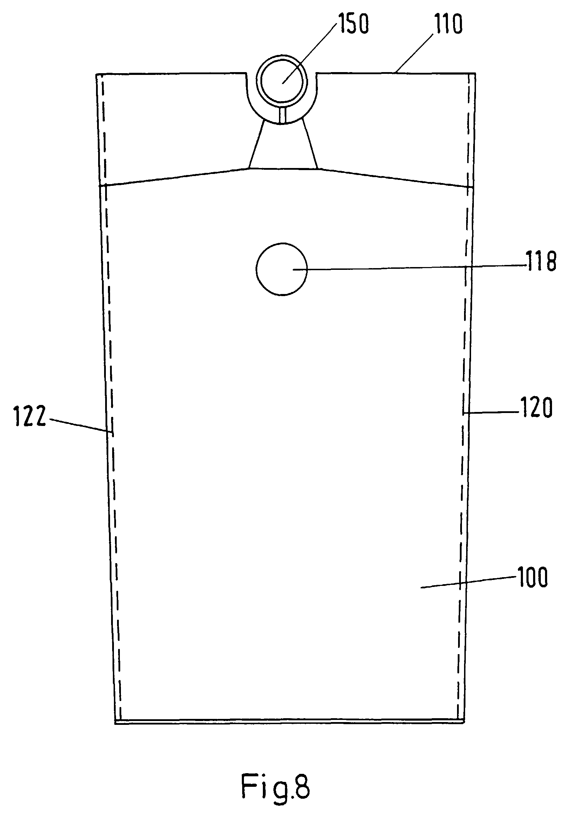

Eine Variante eines Innenkörpers 100 ist in Figur 8 dargestellt. Hier ist das Entnahmesystem 150 weiterhin am Innenkörper 100 festgelegt, die Führungsschienen 120 und 122 sind aber über den oberen Rand des Innenkörpers 100 hinausgeführt und tragen ein Dach 110, das bei in den Außenkörper eingesetzten Innenkörper auf dem Baldachin (16, z.B. in Figur 5) zu liegen kommt und somit für einen relativ wasserdichten Abschluß des Innenraums des Containers sorgt. Der Ring des Entnahmesystems 150 ist in einer Ausnehmung des Daches 110 versenkt, so daß er von außen her nicht oder praktisch nicht sichtbar ist.

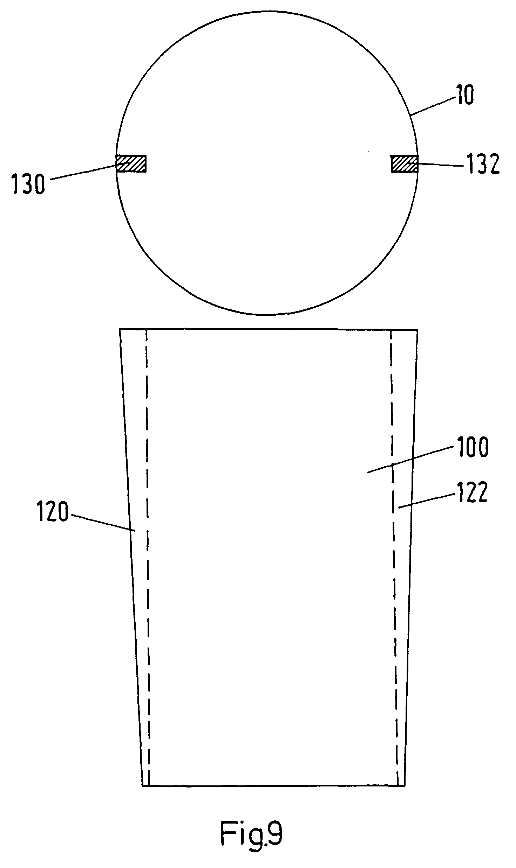

Figur 9 verdeutlicht im Falle eines zum Bodenbereich 14 hin konisch zulaufenden Innenkörpers eine bevorzugte Ausführungsform eines Führungssystems, das sich aus Führungsschienen 120, 122 und aus Führungsbändern 130, 132 zusammensetzt. Der obere Teil der Figur 9 zeigt den Außenkörper 10 in einem Querschnitt an seinem höchsten Punkt. Der in diesem Querschnitt ersichtliche Radius des Außenkörpers entspricht dem Radius des Außenkörpers über seinen gesamten Bereich im Falle eines Außenkörpers 10 in zylindrischer Form, im Falle eines Außenkörpers, der konisch zuläuft, seinem größten Radius.

Der untere Teil der Figur 9 stellt eine Seitenansicht des Innenkörpers 100 dar, der zum Bodenbereich 14 hin konisch zuläuft. Die Führungsbänder 130, 132 sind in ihrer radialen Dimension so ausgewählt, daß auch bei einem zum Bodenbereich 14 hin konisch zulaufenden Innenkörper 100 zu jedem Zeitpunkt, insbesondere beim anfänglichen Einführen des Innenkörpers 100 in den Außenkörper 10, ein zuverlässiges Eingreifen der Führungsbänder 130, 132 in die entsprechenden Führungsschienen 120, 122 sichergestellt ist.

Die radiale Ausdehnung der Führungsschienen 120, 122, gemessen von der Wand des Innenkörpers 100, nehmen in Richtung auf den Bodenbereich 14 hin ab, so daß eine Passung mit den Führungsbändern 130, 132 des Außenkörpers 10 in jeder Position gegeben ist.

Die Führungsbänder 130, 132 haben bei einem zylindrischen Außenkörper 10 eine konstante radiale Ausdehnung, während bei einem zum Bodenbereich hin konisch zulaufenden Außenkörper ihre radiale Ausdehnung, gemessen von der Wand des Außenkörpers 10, entsprechend der radialen Ausdehnungen der Führungsschienen 120, 122 des Innenkörpers 100 abnehmen.

Die Führungsschienen 120, 122 können in einem unteren Bereich des Innenkörpers 100 konisch sich vergrößernde Ausmaße aufweisen (in der Figur nicht gezeigt), um ein problemloseres Einsetzen des Innenkörpers in den Außenkörper zu gewährleisten.

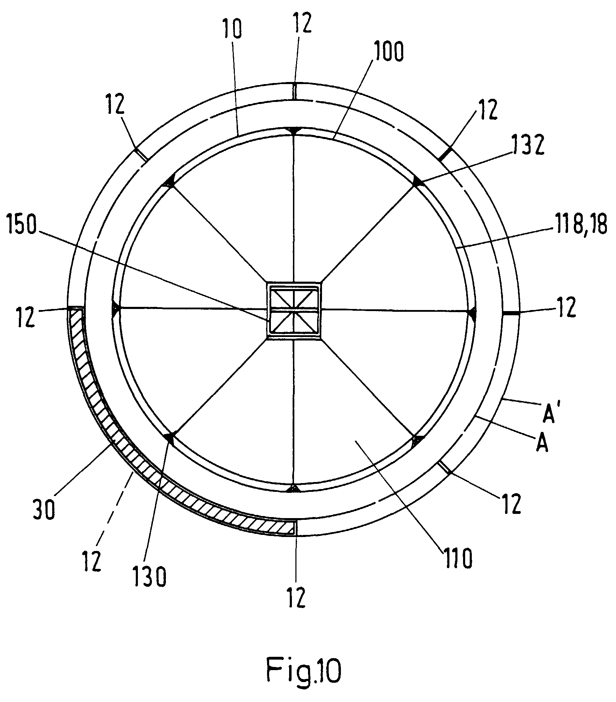

Figur 10 zeigt in einer schematischen Ansicht einen Container mit Außenkörper 10 und Innenkörper 100 in einer Ansicht von oben. Es sind acht Längsstreben 12 vorgesehen, von denen eine (durch die gestrichelte Linie zur Bezugsziffer angedeutet) nur bis unter die Präsentiertafel 30 bzw. weiter oberhalb der Präsentiertafel 30 verläuft. Die Präsentiertafel 30 selbst ist, im wesentlichen der Kontur des Außenkörpers 10 folgend, zwischen der unterbrochenen Längsleiste 12 benachbarten Längsleisten angeordnet. Die radiale Anordnung der Längsstreben 12 ist durch zwei Kreislinien A bzw. A' angedeutet.

Außenkörper 10 und Innenkörper 100 sind durch insgesamt vier Paare einander gegenüberliegender Führungsbänder 130, 132 bzw. zugehöriger Führungsschienen relativ zueinander positioniert. Der Innenkörper 100 weist ein Dach auf, in dessen Zentrum sich das Entnahmesystem 150 befindet. Das Dach kann eine Metallplatte sein, die unter Belastung durch das Gewicht des Innencontainers 100 mit dem Baldachin 16 des Außenkörpers 10 abschließt.

Grundsätzlich könnte an eine Variante des Innenkörpers 100 gedacht werden, bei dem das Entnahmesystem 150 zusammen mit dem Dach 110 (z.B. Figur 8), in den Führungsschienen 120, 122 in Richtung der Zylinderachse des Innenkörpers verschiebbar ist, so daß das Dach 110 als Deckel für den Innenkörper 100 dient. Das Entnahmesystem 150 wäre dann durch die Wände des Außenkörpers 10 dem Betrachter verdeckt.

Es soll weiter angemerkt werden, daß die Präsentiertafel 30 auch unabhängig von einem Container gemäß der vorliegenden Erfindung verwendet werden kann.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Container, gekennzeichnet durch
- einen hohlzylindrischen Außenkörper (10), der auf einer Bodenplatte (14) ruht, wobei in dem Außenkörper (10) mindestens eine Einwurföffnung (18) vorgesehen ist, und
- eine Vielzahl parallel zu der Zylinderachse des Außenkörpers (10) verlaufender Längsstreben (12), die an der Außenseite des Außenkörpers angeordnet sind.

2. Container nach Anspruch 1, dadurch gekennzeichnet, daß die Längsstreben (12) in regelmäßigem Winkelabstand angeordnet sind.

3. Container nach Anspruch 1 oder 2, dadurch gekennzeichnet, daß zumindest eine Gruppe nebeneinander angeordneter Längsstreben (12) vorgesehen ist.

4. Container nach einem der Ansprüche 1 bis 3, dadurch gekennzeichnet, daß an dem Außenkörper (10) ein oberer Abschlußring (16) angebracht ist, an dem die Längsstreben (12) festgelegt sind.

5. Container nach einem der Ansprüche 1 bis 4, dadurch gekennzeichnet, daß die Längsstreben (12) in radialer Richtung beabstandet vom Außenkörper (10) festgelegt sind.

6. Container nach einem der Ansprüche 1 bis 5, dadurch gekennzeichnet, daß ein den Außenkörper (10) umgebendes Lichtband (20) vorgesehen ist.

7. Container nach Anspruch 6, dadurch gekennzeichnet, daß das Lichtband (20) den Außenkörper (10) im wesentlichen in einer Höhe verlaufend umgibt.

8. Container nach Anspruch 6 oder 7, dadurch gekennzeichnet, daß das Lichtband (20) in dem lichten Raum zwischen Außenkörper (10) und Längsstreben (12) verläuft.

9. Container nach Anspruch 1, dadurch gekennzeichnet, daß der Außenkörper (10) zur Bodenplatte (14) hin konisch zulaufend ausgebildet ist.

10. Container nach Anspruch 1, dadurch gekennzeichnet, daß er eine Präsentiertafel (30) aufweist.

11. Container nach Anspruch 10, dadurch gekennzeichnet, daß die Präsentiertafel (30) als Wechselrahmen oder die Aufläche als Deckel mit bevorzugt seitlich angebrachten Scharnieren ausgebildet ist.

12. Container nach Anspruch 10 oder 11, dadurch gekennzeichnet, daß die Präsentiertafel (30) an mindestens einer der Längsstreben (12) oder zwischen jeweils zwei Längsstreben angebracht ist.

13. Container nach einem der Ansprüche 10 bis 12, dadurch gekennzeichnet, daß die Schaufläche (36) der Präsentiertafel (30) zu beleuchten ist.

14. Container nach Anspruch 13, dadurch gekennzeichnet, daß die Beleuchtung innerhalb der Präsentiertafel (30) angeordnet ist.

15. Container nach einem der Ansprüche 10 bis 14, dadurch gekennzeichnet, daß zumindest die Schaufläche (36) der Präsentiertafel (30) der Außenkontur des Außenkörpers (10) im wesentlichen folgt.

16. Container nach einem der vorhergehenden Ansprüche, dadurch gekennzeichnet, daß er einen Innenkörper (100) aufweist, welcher vollständig in dem Außenkörper (118) versenkbar ist.

17. Container nach Anspruch 16, dadurch gekennzeichnet, daß der Innenkörper (100) auf seiner Außenwand zumindest eine Führungseinrichtung (120, 122) aufweist, die in einer entsprechenden Führungseinrichtung (130, 132) zu führen ist, welche im Außenkörper (10) vorgesehen ist.

18. Container nach Anspruch 16 oder 17, dadurch gekennzeichnet, daß der Innenkörper (100) zu seinem Bodenbereich hin konisch zulaufend ausgebildet ist.

19. Container nach Anspruch 18, dadurch gekennzeichnet, daß eine radiale Ausdehnung der Führungseinrichtungen (120, 122) des Innenkörpers (100) in Richtung auf den Bodenbereich des Innenkörpers hin abnimmt.

20. Container nach einem der Ansprüche 17 bis 19, dadurch gekennzeichnet, daß die Führungseinrichtungen (130, 132) des Außenkörpers (10) sich in einem oberen Bereich verjüngen.

21. Container nach einem der Ansprüche 17 bis 20, dadurch gekennzeichnet, daß die Führungseinrichtungen (130, 132) des Außenkörpers (10) mit dem oberen Rand des zylindrischen Außenmantels des Außenkörpers (10) abschließen.

22. Container nach einem der Anspräche 17 bis 20, dadurch gekennzeichnet, daß die Führungseinrichtungen (130, 132) des Außenkörpers (10) über den oberen Rand des zylindrischen Außenmantels des Außenkörpers (10) hinausragen.

23. Container nach einem der Ansprüche 15 bis 22, dadurch gekennzeichnet, daß der Innenkörper (10) mit einem von außen zugänglichen Entnahmesystem (150) versehen ist.
